# EUROPÄISCHE PATENTANMELDUNG

(11) **EP 0 982 161 A1**
(43) Veröffentlichungstag der Anmeldung: **01.03.2000**
(21) Anmeldenummer: 99116303.1
(22) Anmeldetag: 19.08.1999
(51) Int. Cl.: B60D 1/44

(54) **Seitlich verfahrbare Zugvorrichtung für ein Fahrzeug**

(30) Priorität: 24.08.1998 US 138971
(71) Anmelder: DEERE & COMPANY, Moline Illinois 61265-8098 (US)
(72) Erfinder: Witte, Benjamin Michael, Fairbank, Iowa 50629 (US); Nagorcka, James Arthur, Tarrington, Victoria 3301 (AU)
(74) Vertreter: Lau-Loskill, Philipp, Dipl.-Phys.

(57) **Zusammenfassung**

Es wird eine Zugvorrichtung für ein Zugfahrzeug beschrieben, welche eine bogenförmige, an dem Fahrzeug befestigbare Führung (12), einen Schlitten (40), der sich längs der Führung (12) bewegen läßt, und Kupplungsmittel, durch die sich ein gezogenes Anbaugerät an dem Schlitten (40) befestigen läßt, enthält.

Für einen einfachen Aufbau und um eine Zugvorrichtung zu erhalten, die große Zugkraftbelastungen aufnehmen kann, wird eine Führung (12) vorgeschlagen mit einer oberen Außenwand und (32) einer unteren Außenwand (34), die vertikal zueinander beabstandet sind und einen ersten Abstand zueinander einnehmen, und mit einer äußeren Randfläche (38) sowie einer inneren Randfläche (36), die horizontal zueinander beabstandet sind und einen zweiten Abstand zueinander einnehmen. Dabei ist der zweite Abstand größer als der erste Abstand, d. h. die Führung (12) ist in horizontaler Richtung dicker als in vertikaler Richtung, so daß sie schwere Zuglasten aufnehmen kann.

Der Schlitten (40) kann einen Rahmen und mehrere drehbar am Rahmen befestigte Rollen (56, 58, 60, 62) mit vertikaler Drehachse aufweisen, die in rollendem Eingriff mit den in radiale Richtung weisenden Randflächen (36, 38) der Führung (12) stehen. Jede Rolle (56, 58, 60, 62) besitzt eine zu der Randfläche (36, 38), mit der sie in Eingriff steht, komplementären Lauffläche, die ein V-förmiges Profil aufweisen kann.

## Beschreibung

Die Erfindung betrifft eine seitlich verfahrbare Zugvorrichtung für ein Zugfahrzeug mit einer bogenförmigen, an dem Fahrzeug befestigbaren Führung, mit einem Schlitten, der sich längs der Führung bewegen läßt, und mit Kupplungsmitteln, durch die sich ein gezogenes Anbaugerät an dem Schlitten befestigen läßt, welche gemäß dem Oberbegriff eines der Ansprüche 1, 2 oder 3 ausgebildet ist.

Weit ausschwenkende Zugpendel von Traktoren sind dafür bekannt, daß sich die Anhängegerätekräfte auf das Zugzentrum des Fahrzeugs ausrichten lassen, so daß die auf das Fahrzeug wirkenden Drehmomente minimiert werden. Derartige Zugpendel verbessern die Richtungssteuerung des Fahrzeugs, insbesondere während Kurvenfahrten oder beim Wenden unter Last. Die Wirksamkeit derartiger Zugpendel wird jedoch beim Durchfahren scharfer Kurven durch physischen Eingriff mit den Reifen, Raupen oder der Dreipunkt-Anbauvorrichtung des Fahrzeugs beeinträchtigt. Wenn eine schärfere Kurve durchfahren wird und ein Eingriff stattfindet, wird ein Drehmoment auf das Fahrzeug übertragen und die Fahrzeugbedienung erschwert.

Ein Versuch, dieses Problem zu lösen, ist in der US-A-5,468,007 beschrieben, wo ein gezogenes Anbaugerät an einen Schlitten gekoppelt ist, welcher entlang einer gekrümmten, am hinteren Ende des Zugfahrzeugs befestigten Führung bewegbar ist. Die Belastbarkeit der beschriebenen Zugvorrichtung ist jedoch begrenzt, da die gekrümmte Führung in der Richtung, in der die Belastungskräfte wirken, relativ schwach bzw. dünn ausgebildet ist. Auch erfordert diese Zugvorrichtung acht Rollen mit vertikalen Rotationsachsen, um Seitenkräfte aufzunehmen, und wenigstens ein zusätzliches Rollenpaar mit horizontaler Rotationsachse, um vertikale Lasten aufzunehmen. Des weiteren ist die gekrümmte Führung der äußeren Peripherie einer großen, massiven, horizontal ausgerichteten Platte befestigt, die sich nicht vertikal einstellen läßt.

Die der Erfindung zugrunde liegende Aufgabe wird darin gesehen, eine Zugvorrichtung der eingangs genannten Art anzugeben, durch welche die vorgenannten Probleme überwunden werden. Insbesondere soll die Zugvorrichtung einen einfachen Aufbau aufweisen und in der Lage sein, große Zugkraftbelastungen aufzunehmen.

Die Aufgabe wird erfindungsgemäß durch die Lehren eines der Patentansprüche 1, 2 oder 3 gelöst. Weitere vorteilhafte Ausgestaltungen und Weiterbildungen der Erfindung gehen aus den Unteransprüchen hervor.

Gemäß einer ersten erfindungsgemäßen Ausbildung enthält die Führung eine obere Außenwand und eine untere Außenwand, die vertikal zueinander beabstandet sind und einen ersten Abstand zueinander einnehmen. Die Führung enthält des weiteren einen bezüglich der Krümmung der Fuhrung außeren Rand (oder äußere Schmalseite) sowie einen inneren Rand (oder innere Schmalseite), die horizontal zueinander beabstandet sind und einen zweiten Abstand zueinander einnehmen. Dabei ist der zweite Abstand größer als der erste Abstand. Das heißt die Führung ist in horizontaler Richtung dicker als in vertikaler Richtung, so daß sie insbesondere in horizontaler Richtung sehr stabil ist und schwere Zuglasten aufnehmen kann.

Bei einer zweiten erfindungsgemäßen Ausbildung weist der Schlitten einen Rahmen und mehrere drehbar am Rahmen befestigte Rollen auf, die in rollendem Eingriff mit der Führung stehen. Die Führung weist Schmalseiten oder Randflächen auf, die bezüglich der Krümmung der Führung in im wesentlichen radiale Richtung weisen. Jede Rolle besitzt eine zu der Randfläche, mit der sie in Eingriff steht, komplementäre Lauffläche.

Eine dritte erfindungsgemäße Ausbildung sieht ergänzend hierzu vor, daß alle Rollen um im wesentlichen vertikale Achsen drehbar sind und daß jede Rolle eine äußere Umfangsfläche aufweist, die auf die Fläche der zugehörigen Schmalseite oder Randfläche der Führung abgestimmt ist und mit dieser in zusammenpassendem Eingriff steht, wobei die Umfangsfläche der Rolle ein V-förmiges Profil und die Schmalseite oder Randfläche der Führung ein hierauf angepaßtes Profil aufweisen.

Vorzugsweise enthält der Schlitten ein Grundelement, ein erstes drehbar auf dem Grundelement montiertes Rollenpaar, welches in rollendem Eingriff mit einem nach hinten weisenden (äußeren) Rand der Führung steht, und ein zweites drehbar auf dem Grundelement montiertes Rollenpaar, welches in rollendem Eingriff mit einem nach vorn weisenden (inneren) Rand der Führung steht.

Der Schlitten enthält vorzugsweise auch ein Tragteil, welches zwischen den Rollen des ersten Rollenpaars mit dem Grundelement verbunden ist, und ein als Kupplungsplatte ausgebildetes Kupplungselement, das am Tragteil befestigt ist. Das Tragteil liegt zwischen dem Kupplungselement und dem Grundelement. Eine Zugpendelbolzenbohrung erstreckt sich durch die bezüglich der Fahrzeugrichtung hinteren Enden der Kupplungsplatte und des Grundelements.

Vorzugsweise enthält das Grundelement eine obere Grundplatte und eine an dieser befestigte untere Grundplatte. Die untere Grundplatte läßt sich relativ zur oberen Grundplatte verschieben.

Der Nutzen eines schwingenden Zugpendels während Wendemanövern unter Last läßt sich mit der erfindungsgemäßen Anordnung gegenüber einem konventionell schwenkbaren Zugpendel steigern, da die ausschwingenden Bauelemente nicht so schnell den feststehenden Bauelementen in die Quere kommen, wie dies bei konventionellen Zugpendeln der Fall ist. Die Kompatibilität mit Dreipunkt-Anbauvorrichtungen wird verbessert, in dem letztere als Zwischenvorrichtung verwendet wird. Die konventionelle vertikale Verstellbarkeit der Dreipunkt-Anhängevorrichtungen kann genutzt werden, um während des Anbaus den Schlitten auf Anbaugerätezungen auszurichten und um während Feldarbeiten die Anbaugeräteausrichtung in Längsrichtung zu nivellieren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine seitlich verfahrbare Zuganbauvorrichtung in einer Ansicht von oben in Richtung der Verschwenkachse,
- Fig. 2: die in Fig. 1 dargestellte Zuganbauvorrichtung von hinten gesehen,
- Fig. 3: eine vergrößerte Schnittansicht längs der in Fig. 1 dargestellten Linie 3-3,

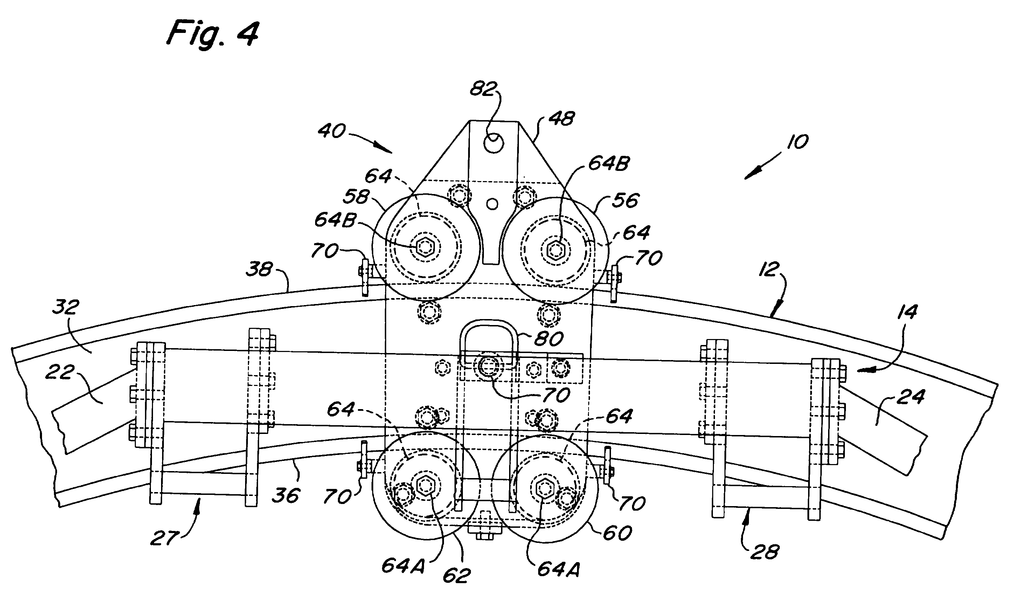

- Fig. 4: die vergrößerte Ansicht eines mittleren Bereichs der Fig. 1 und

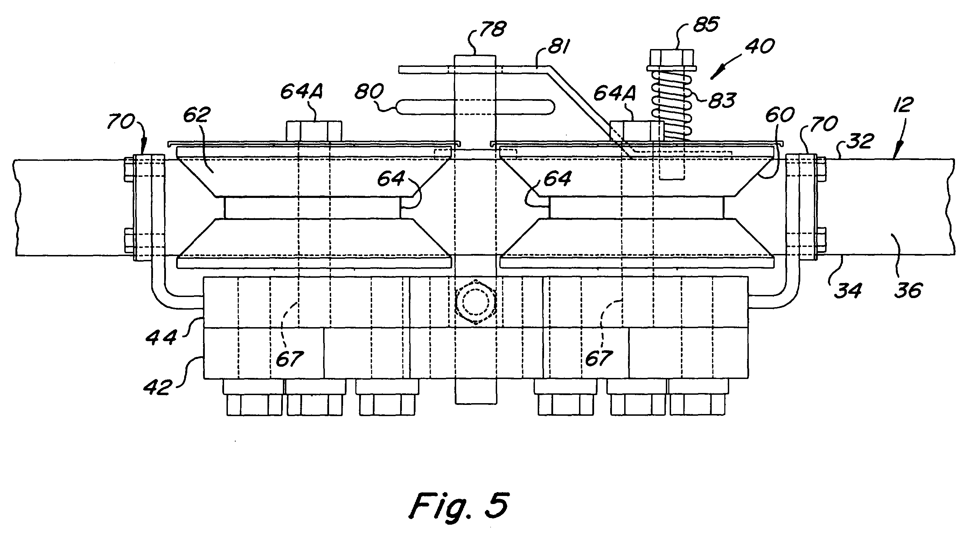

- Fig. 5: eine vergrößerte Ansicht in Richtung der in Fig. 1 dargestellten Linie 5-5.

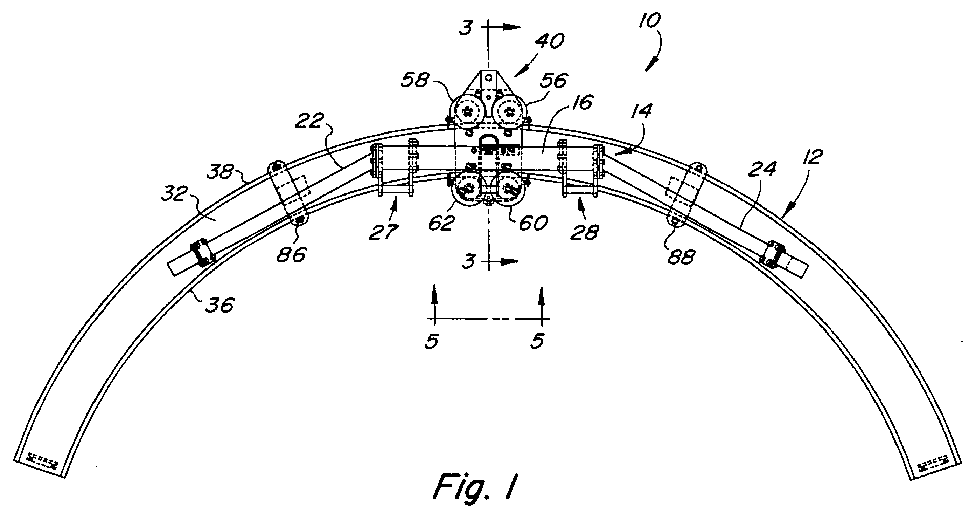

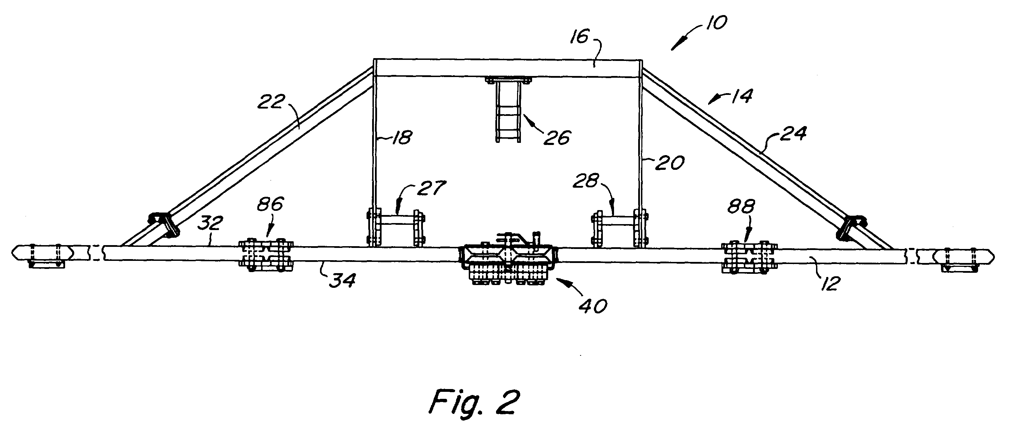

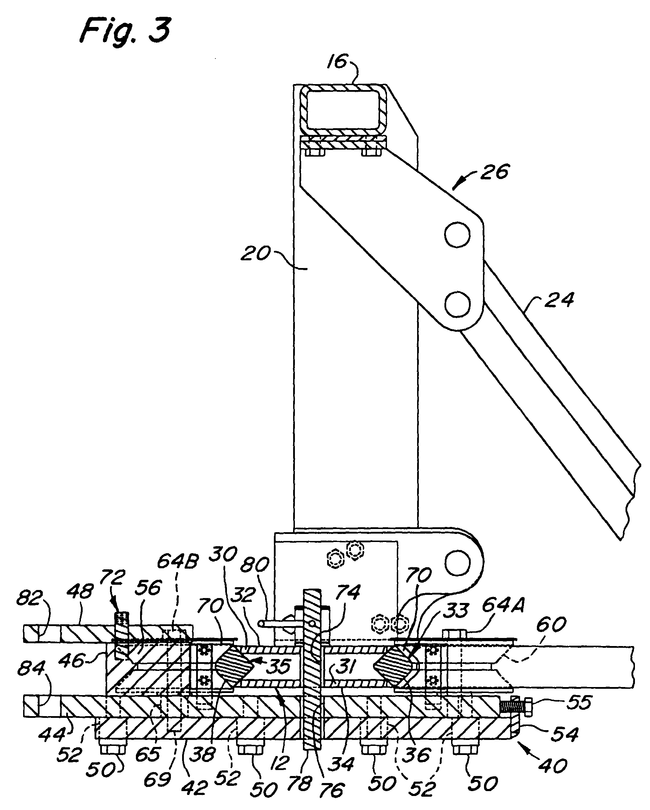

Aus den Figuren 1 und 2 geht eine Anbauvorrichtung 10 hervor, die eine bogenförmige Führung bzw. einen bogenförmigen Träger 12 aufweist. Die Führung 12 ist an einer Kopplungseinrichtung 14 befestigt, die an eine nicht dargestellte konventionelle Dreipunkt-Anbauvorrichtung kuppelbar ist, welche üblicherweise am Ende eines nicht näher dargestellten Zugfahrzeugs angebracht ist. Die Kopplungseinrichtung 14 enthält ein horizontal ausgerichtetes Querstück 16, welches oberhalb des hinsichtlich der Fahrzeugausrichtung hinteren Bereich der Führung 12 durch zwei vertikale Arme 18, 20 und zwei seitliche, schräg verlaufende Tragarme 22, 24 abgestützt ist. An dem mittleren Teil des Querträgers 16 ist eine obere Koppelstelle 26 befestigt. An den Innenseiten jedes vertikalen Arms 18, 20 ist je eine untere Koppelstelle 27, 28 angebracht. Die Führung 12 enthält eine obere Platte 30, eine untere Platte 31, eine (bezüglich des Krümmungsradius der Führung) innere Schiene 33 und eine äußere Schiene 35. Die Oberseite 32 und die Unterseite 34 der Führung 12 sind im wesentlichen flach ausgebildet. Die innere Kante oder Schmalseite 35 und die äußere Kante oder Schmalseite 38 der Schienen 33, 35 haben ein nach außen weisendes konvexes V-förmiges Profil. Die horizontale Breite zwischen den Schmalseiten 36 und 38 ist wesentlich größer als der vertikale Abstand zwischen der Oberseite 32 und der Unterseite 34 der Führung 12, so daß die Führung 12 befähigt ist, ohne nennenswerte Verformungen große Lasten, die im wesentlichen in Fahrzeuglängsrichtung wirken, aufzunehmen. Wie es am besten aus Fig. 1 hervorgeht, liegt der Krümmungsmittelpunkt der Führung 12 vorzugsweise im Bereich des nicht gezeigten Fahrzeugs. Die Führung 12 ist damit in einer Richtung, die von dem Fahrzeug weg weist, konvex. Wie aus Fig. 3 ersichtlich, sind aus Gründen einer erhöhten Steifigkeit in der horizontalen Ebene die Oberseite 32 und die Unterseite 34 der Führung 12 zueinander vertikale beabstandete, wobei ihr Abstand kleiner ist als der horizontale oder radiale Abstand zwischen der inneren Schmalseite 36 und der äußeren Schmalseite 38 der Schienen 33, 35.

Wie aus den Figuren hervorgeht, ist auf der Führung 12 ein Schlitten 40 längsverschieblich angeordnet. Der Schlitten 40 enthält eine untere Grundplatte 42, eine obere Grundplatte 44, eine Tragplatte 46 und eine Oberplatte 48. Die untere Grundplatten 42 und die obere Grundplatte 44 sind durch Schrauben 50 miteinander verbunden, welche sich durch Langlöcher 52 in der unteren Grundplatte 42 derart erstrecken, daß sich die Lage der unteren Grundplatte 42 relativ zur oberen Grundplatte 44 einstellen läßt. Die Tragplatte 46 ist mit der Oberseite der oberen Grundplatte 44 und die Oberplatte 48 ist mit der Oberseite der Tragplatte 46 verschweißt. An der hinsichtlich der Fahrzeugausrichtung vorderen Schmalseite der unteren Grundplatte 42 ist eine Schraubenspindelplatte 54 festgeschweißt, die eine einschraubbare Schraubenspindel 55 aufnimmt. Die Schraubenspindel 55 steht mit der oberen Grundplatte 44 in Eingriff und dient der Einstellung der relativen Lage zwischen den Grundplatten 42 und 44.

Auf der Oberseite der oberen Grundplatte 44 sind vier drehbare Laufrollen 56, 58, 60 und 62 angeordnet. Die inneren Laufrollen 60 und 62 werden durch die Schrauben 64A, die in Gewindebohrungen 67 der oberen Grundplatte 44 eingedreht sind, ortsfest gehalten. Die äußeren Laufrollen 56 und 58 werden durch die Schrauben 64B, die sich durch Langlöcher oder Schlitze 65 in der oberen Grundplatte 44 erstrecken und in Gewindebohrungen 69 der unteren Grundplatte 42 eingedreht sind, ortsfest gehalten. Dies ermöglicht eine relative Positionierung der Grundplatten 42 und 44 zueinander, so daß sich die inneren Laufrollen 60, 62 und die äußeren Laufrollen 56, 58 auf die Breite der Führung 12 derart einstellen lassen, daß alle Laufrollen 56, 58, 60, 62 im rollenden Eingriff mit der Führung 12 stehen. Die Laufrollen 56, 58, 60, 62 sind kreisrund und enthalten auf ihrer Umfangsfläche eine umlaufende Nut mit V-förmigem Profil, welches komplementär zu dem Profil der Schmalseiten 36 und 38 der Führung 12 ist und von diesem passend aufgenommen wird, das heißt beim Abrollen der Laufrollen 56, 58, 60, 62 besteht immer ein Linienkontakt zwischen der V-förmigen Laufrollenfläche und der Oberfläche der zugehörigen Schmalseite 36, 38 der Führung 12. Vorzugsweise weist jede Laufrolle 56, 58, 60 und 62 am Grund der V-Form eine mittlere Nut 64 auf, durch die der tragenden Eingriff der V-Flächen sichergestellt werden soll.

In der Nähe der gegenüberliegenden Ecken des Schlittens 40 sind vier V-förmige Wischblätter derart befestigt, daß sie Schmutz von den Schmalseiten 36, 38 der Führung 12 wischen, wenn sich der Schlitten 40 längs der Führung 12 bewegt. In eine Bohrung, die sich durch die Platten 48 und 46 erstreckt, ist ein Bolzen 72 eingeschweißt, der ein freies Gewindeende aufweist. Der Niederhalter eines nicht gezeigten Zugpendelbolzen kann auf dem Bolzen 72 festgeschraubt werden. Eine Bohrung 74 erstreckt sich durch einen mittleren Bereich durch die Führung 12. Eine entsprechende Bohrung 76 erstreckt sich durch einen mittleren Bereich der Grundplatten 42 und 44. Wenn der Schlitten 40 im mittleren Bereich der Führung 12 positioniert ist, kann ein Schlittenfeststellbolzen 78 in die Bohrungen 74 und 76 eingesetzt werden, um den Schlitten 40 in dieser mittleren Position festzusetzen. Am oberen Ende des Schlittenfeststellbolzens 78 ist ein Bolzenhandhabe 80 drehbar befestigt, so daß eine Bedienungsperson den Schlittenfeststellbolzen 78 aus den Bohrungen 74, 76 ziehen kann und sich der Schlitten 40 frei entlang der Führung 12 bewegen läßt.

An der Oberseite 32 der Führung 12 ist ein Bolzenrückhalter 81 verkippbar befestigt, der durch eine Niederhalterfeder 83 und eine Schraube 85 nach unten gedrückt wird, um eine versehentliche Entfernung des Bolzens 78 zu verhindern. Durch das hintere Ende der Platten 44 und 48 erstrecken sich vertikale Bohrungen 82 und 84, die einen Bolzen aufnehmen können, durch den sich ein nicht gezeigtes Anbaugerät am hinteren Ende des Schlittens 40 befestigen läßt. Beidseits des Schlittens 40 lassen sich auf der Führung 12 Anschlagteile 86 und 88 festsetzen, durch die die Schlittenbewegung begrenzt wird. Auch wenn eine bevorzugte Ausgestaltung der Erfindung vier Laufrollen enthält, kann der Schlitten auch mit drei Laufrollen arbeiten, z. B. mit zwei äußeren Laufrollen und einer inneren Laufrolle oder mit einer äußeren Laufrolle und zwei inneren Laufrollen.

Durch den erfindungsgemäßen Aufbau wird ein Schlitten 40 bereitgestellt, der sich entlang der kreis- oder bogenförmigen Führung 12 frei bewegen läßt, wobei die Führung 12 nach hinten über die nicht gezeigten Hinterräder oder die nicht gezeigten Raupen sowie über die nicht gezeigte Dreipunkt-Geräteanbauvorrichtung des nicht gezeigten Zugfahrzeugs hinausragt. Die Lage der Führung 12 ist so gewählt, daß ihr Kurvenmittelpunkt nahe dem mittleren Bereich der nicht gezeigten Zugvorrichtung des Fahrzeugs liegt. Wenn das Fahrzeug, insbesondere der Traktor, eine Kurve durchfährt oder wendet, zieht die Zugkraft des Anbaugeräts den Schlitten 40 entlang eines kreisförmigen Bogens, der durch die Führung 12 gebildet wird, so weit zu einer Seite der Führung 12 bis der Schlitten 40 und die nicht gezeigte Zugstange des Anbaugerätes zum Krümmungsmittelpunkt der Führung 12 ausgerichtet sind. Vorzugsweise ist die Führung 12 groß genug, so daß sie seitlich über die Reifen oder die Raupen sowie die DreipunktGeräteanbauvorrichtung des Fahrzeugs hinausragt und sich der Schlitten 40 ohne Kollision weiter als ein konventionelles Zugpendel mit seinen physischen Begrenzungen seitlich bewegen kann. In diesem Zustand, bei dem die Zugstange des Anbaugeräts zum Krummungsmittelpunkt der Führung 12 hin ausgerichtet ist, wird das auf das Fahrzeug übertragene Drehmoment minimalisiert und die Möglichkeiten der Fahrzeugbedienung erweitert.

Für bestimmte Anbaugeräte läßt sich die Bewegung des Schlittens 40 durch einstellbare Anschlagteile 86, 88 begrenzen. Der Schlitten 40 läßt sich auch in der mittleren Position durch einen Bolzen festsetzen. Die Führung 12 kann über eine Dreipunkt-Anbauvorrichtung an dem Fahrzeug befestigt werden. Sie kann auch unmittelbar an dem Fahrzeugchassis befestigt werden. Eine an einer Dreipunkt-Anbauvorrichtung befestigte Führung 12 läßt sich schnell entkoppeln, so daß sich dann die Dreipunkt-Anbauvorrichtung in üblicher Weise verwendet läßt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Zugvorrichtung für ein Zugfahrzeug mit einer bogenförmigen, an dem Fahrzeug befestigbaren Führung (12), mit einem Schlitten (40), der sich längs der Führung (12) bewegen läßt, und mit Kupplungsmitteln, durch die sich ein gezogenes Anbaugerät an dem Schlitten (40) befestigen läßt, dadurch gekennzeichnet, daß die Führung (12) eine obere Außenwand (32) und eine untere Außenwand (34), die vertikal zueinander beabstandet sind und einen ersten Abstand zueinander einnehmen, und einen äußeren Rand (38) sowie einen inneren Rand (36) aufweist, die horizontal zueinander beabstandet sind und einen zweiten Abstand zueinander einnehmen, wobei der zweite Abstand größer ist als der erste Abstand.

2. Zugvorrichtung für ein Zugfahrzeug mit einer bogenförmigen, an dem Fahrzeug befestigbaren Führung (12), mit einem Schlitten (40), der sich längs der Führung (12) bewegen läßt, wobei der Schlitten (40) einen Rahmen und mehrere drehbar am Rahmen befestigte Rollen (56, 58, 60, 62) aufweist und die Rollen (56, 58, 60, 62) in rollendem Eingriff mit der Führung (12) stehen, und mit Kupplungsmitteln, durch die sich ein gezogenes Anbaugerät an dem Schlitten (40) befestigen läßt, dadurch gekennzeichnet, daß die Führung (12) im wesentlichen in radiale Richtung weisende Randflächen aufweist, und daß jede Rolle (56, 58, 60, 62) eine zu der Randfläche, mit der sie in Eingriff steht, komplementäre Lauffläche hat.

3. Zugvorrichtung für ein Zugfahrzeug mit einer bogenförmigen, an dem Fahrzeug befestigbaren Führung (12), mit einem Schlitten (40), der sich längs der Führung (12) bewegen läßt, wobei der Schlitten (40) einen Rahmen und mehrere drehbar am Rahmen befestigte Rollen (56, 58, 60, 62) aufweist und die Rollen (56, 58, 60, 62) in rollendem Eingriff mit der Führung (12) stehen, und mit Kupplungsmitteln, durch die sich ein gezogenes Anbaugerät an dem Schlitten (40) befestigen läßt, dadurch gekennzeichnet, daß jede Rolle (56, 58, 60, 62) um eine vertikale Achse verdrehbar ist und daß jede Rolle (56, 58, 60, 62) eine äußere Umfangsfläche aufweist, welche passen an einer Schmalseite (36, 38) der Führung (12) eingreift, wobei die Umfangsfläche der Rolle (56, 58, 60, 62) ein V-förmiges Profil aufweist.

4. Zugvorrichtung nach Anspruch 2 oder 3, dadurch gekennzeichnet, daß die Führung (12) eine obere Außenwand (32) und eine untere Außenwand (34), die vertikal zueinander beabstandet sind und einen ersten Abstand zueinander einnehmen, und einen äußeren Rand (38) sowie einen inneren Rand (36) aufweist, die horizontal zueinander beabstandet sind und einen zweiten Abstand zueinander einnehmen, wobei der zweite Abstand größer ist als der erste Abstand.

5. Zugvorrichtung nach einem der Ansprüche 1 bis 4, dadurch gekennzeichnet, daß der Schlitten (40) ein Grundelement (42, 44), wenigstens eine hintere Rolle (56, 58) und wenigstens eine vordere Rolle (60, 62) enthält, und daß die hintere Rolle (56, 58) drehbar auf dem Grundelement (42, 44) befestigt ist und in abrollendem Eingriff mit dem hinteren Rand (38) der Führung (12) steht und die vordere Rolle (60, 62) drehbar auf dem Grundelement (42, 44) befestigt ist und in abrollendem Eingriff mit dem vorderen Rand (36) der Führung (12) steht.

6. Zugvorrichtung nach Anspruch 5, dadurch gekennzeichnet, daß der Schlitten (40) ein Tragteil (46) und ein Koppelelement (48) enthält, daß das Tragteil (46) sich in der Nähe der wenigstens einen hinteren Rolle (56, 58) befindet und mit dem Grundelement (42, 44) verbunden ist, daß das Koppelelement (48) an dem Tragteil (46) befestigt ist, und daß das Tragteil (46) zwischen dem Koppelelement (48) und dem Grundelement (42, 44) angeordnet ist.

7. Zugvorrichtung nach Anspruch 6, dadurch gekennzeichnet, daß sich durch nach hinten vorstehende Endbereiche des Koppelelements (48) und des Grundelements (44) je eine Bohrung für einen Zugpendelbolzen erstreckt.

8. Zugvorrichtung nach einem der Ansprüche 5 bis 7, dadurch gekennzeichnet, daß das Grundelement eine obere Grundplatte (44) und eine mit der oberen Grundplatte (44) verbundene untere Grundplatte (42) enthält, daß die obere und die untere Grundplatte (44, 42) relativ zueinander verschiebbar sind, und daß die wenigstens eine vordere Rolle (60, 62) an der oberen Grundplatte (44) befestigt ist und die wenigstens eine hintere Rolle (56, 58) an der unteren Grundplatte (42) befestigt ist.

9. Zugvorrichtung nach einem der Ansprüche 1 bis 8, dadurch gekennzeichnet, daß der Schlitten (40) Rollen (56, 58, 60, 62) enthält, deren Umfangsflächen mit dem inneren bzw. äußeren Rand (36, 38) der Führung (12) in Eingriff stehen, und daß die Umfangsflächen der Rollen (56, 58, 60, 62) komplimentär zu dem inneren bzw. dem äußeren Rand (36, 38) der Führung (12) sind.

10. Zugvorrichtung nach Anspruch 9, dadurch gekennzeichnet, daß die Umfangsflächen der Rollen (56, 58, 60, 62) ein V-förmiges Profil aufweisen, welches komplimentär zu dem inneren bzw. dem äußeren Rand (36, 38) der Führung (12) ist.

11. Zugvorrichtung nach einem der Ansprüche 1 bis 10, dadurch gekennzeichnet, daß der Schlitten (40) Rollen (56, 58, 60, 62) enthält, die um vertikale Achsen verdrehbar sind und daß jede Rolle (56, 58, 60, 62) eine äußere Fläche mit V-förmigem Profil aufweist, welche passend mit einer Schmalseite (36, 38) der Führung (12) in Eingriff steht.
